# EUROPÄISCHE PATENTANMELDUNG

(11) **EP 4 455 060 A1**
(43) Veröffentlichungstag der Anmeldung: **30.10.2024**
(21) Anmeldenummer: 24168494.3
(22) Anmeldetag: 04.04.2024
(51) Int. Cl.: B65G 15/64, B65G 39/071, B65G 39/16

(54) **GURTZENTRIERUNG**

(30) Priorität: 28.04.2023 DE 102023111136
(71) Anmelder: Stadler Anlagenbau GmbH, 88361 Altshausen (DE)
(72) Erfinder: BUCK, Tobias, 88356 Ostrach (DE)
(74) Vertreter: Otten, Roth, Dobler & Partner mbB Patentanwälte

(57) **Zusammenfassung**

Vorrichtung zur Zentrierung eines Gurtbandes 4 an einem Förderer 3, umfassend ein um eine Umlenkrolle 6 und eine Antriebsrolle 5 und in Laufrichtung 17 des Förderers 3 angeordnetes Gurtband 4, wobei das Gurtband 4 eine Gurtband-Außenseite 15 und eine Gurtband-Innenseite 16 umfasst, wobei das Gurtband 4 ein Obergurtband 7 sowie ein Untergurtband 8 umfasst, eine erste Gurttrommel 11, eine zweite Gurttrommel 12, sowie eine dritte Gurttrommel 13, wobei wenigstens die dritte Gurttrommel 13 kreisförmig und kongruent zueinander liegende Ränder 14a, 14b aufweist, wobei das Gurtband 4 derart zwischen den Gurttrommeln 11, 12, 13 geführt und gespannt gehalten ist, sodass entweder die erste Gurttrommel 11 und die zweite Gurttrommel 12 auf der Gurtband-Außenseite 15 und die dritte Gurttrommel 13 auf der Gurtband-Innenseite 16 anliegen, oder die erste Gurttrommel 11 und die zweite Gurttrommel 12 auf der Gurtband-Innenseite 16 und die dritte Gurttrommel 13 auf der Gurtband-Außenseite 17 anliegen, wobei in einer Draufsicht und orthogonal zu der Laufrichtung 17 des Förderers 3, der Durchmesser einer Einhüllenden der dritten Gurttrommel 13 zu Rändern 14a, 14b der dritten Gurttrommel 13 hin abnimmt.

## Beschreibung

Die vorliegende Erfindung betrifft das technische Gebiet der Zentrierung von Gurtbändern an Förderern.

Ein allgemeines Problem von Gurtbändern an Förderanlagen liegt darin, dass speziell bei langen Gurtbändern, oder bei hohen Traglasten, die Gurtbänder dazu tendieren aus der gewünschten Laufrichtung weg zu driften, was Komplikationen und Störungen im Betrieb des Förderers erzeugt.

Verschiedenste Möglichkeiten zur Zentrierung von Gurtbändern sind einem Fachmann aus dem Stand der Technik bereits bekannt.

Beispielsweise zeigt das Dokument US 4 832 186 A ein Fördersystem mit Riemenscheibenvorrichtungen wobei eine hiervon mit einer zylindrischen Walze mit darauf angebrachten schraubenförmigen Stegen ausgebildet ist, die von der Mitte der Walze zu ihren Enden hin mit abnehmender Neigung spiralförmig verlaufen. Die schraubenförmigen Stege kommen hierbei mit der Bahn in Eingriff und üben Zentrierkräfte auf sie aus, die somit die Bahn relativ zu den Riemenscheibenmitten zu zentrieren.

Weiterhin zeigt die EP 0 781 248 B1 Lenkrollen, die ein laufendes Förderband derart führt, dass das Band einem mittigen Weg folgt. Eine Leitrolle umfasst eine Tragachse, die an einem Traggestell der Fördereinrichtung angebracht wird, sowie besagte Lenkrolle in Form einer äußeren hohlen, im allgemeinen zylindrischen Hülse, die drehbar auf der Tragachse angebracht ist und im allgemeinen quer zu einem darauf laufenden Förderband ausgerichtet ist. Der Aufbau ist derart gestaltet, dass wenn sich das Förderband auf den einen oder den anderen Endbereich zu bewegt, das Band, das über zwei Bereiche der Rolle läuft, die mit unterschiedlichen Umfangsgeschwindigkeiten laufen, eine Kraft auf die Lenkrolle ausübt, durch die die Lenkrolle um die Schwenkachse geschwenkt wird und das Band wieder in eine mittige Position zurücklenkt.

Nachteilig ist hierbei, dass bei einem Laufrichtungswechsel des Gurtbandes oder beim Vorliegen einer nicht optimalen Vulkanisierung des Gurtbandes ein zuverlässiger Betrieb des Förderers nicht gewährleistet werden kann da vermehrt Ausfällen auftreten können. Insbesondere bei Reversivförderern kann ein Einsatz beispielsweise oben genannter Lenkrollen zu Komplikationen oder zu Betriebsstörungen, speziell im Moment des Laufrichtungswechsels, führen.

Technische Aufgabe der vorliegenden Erfindung ist es daher, den Stand der Technik zu verbessern und alternative Möglichkeiten zur Zentrierung von Gurtbändern an Förderern zu schaffen.

Die technische Aufgabe wird durch einen Gegenstand mit den technischen Merkmalen nach den unabhängigen Ansprüchen gelöst.

Vorteilhafte Ausführungsformen sind Gegenstand der abhängigen Ansprüche, der Beschreibung und der Figuren.

Im Sinne der Erfindung ist unter einem Förderer eine Förderanlage, ein Förderband, ein Bandförderer, ein Reversivförderer oder dergleichen zu verstehen, bei welchem beispielsweise Schüttgüter oder Stückgüter von einem ersten Ort zu einem zweiten transportiert werden.

Weiterhin im Sinne der Erfindung ist unter einem Obergurtband derjenige Teil des Gurtbandes zu verstehen, der zu jedem Zeitpunkt auf einer Oberseite einer Förderanlage die zu transportierenden Güter trägt. Im Gegensatz hierzu ist im Sinne der Erfindung unter einem Untergurtband derjenige Teil des Gurtbandes zu verstehen, der dem Obergurtband gegenüberliegend sich zu jedem Zeitpunkt auf einer Unterseite der Förderanlage befindet.

Gemäß einem Aspekt wird die technische Aufgabe der Erfindung gelöst durch eine Vorrichtung zur Zentrierung eines Gurtbandes an einem Förderer, umfassend ein um die Umlenkrollen und in Laufrichtung des Förderers angeordnetes Gurtband, wobei das Gurtband eine Gurtband-Außenseite und eine Gurtband-Innenseite umfasst, wobei das Gurtband ein Obergurtband sowie ein Untergurtband umfasst, eine erste Gurttrommel, eine zweite Gurttrommel, sowie eine dritte Gurttrommel, wobei wenigstens die dritte Gurttrommel kreisförmig und kongruent zueinander liegende Ränder aufweist, wobei das Gurtband derart zwischen den Gurttrommeln geführt und gespannt gehalten ist, sodass entweder die erste Gurttrommel und die zweite Gurttrommel auf der Gurtband-Außenseite und die dritte Gurttrommel auf der Gurtband-Innenseite anliegen, oder die erste Gurttrommel und die zweite Gurttrommel auf der Gurtband-Innenseite und die dritte Gurttrommel auf der Gurtband-Außenseite anliegen, wobei in einer Draufsicht und orthogonal zu der Laufrichtung des Förderers, der Durchmesser einer Einhüllenden der dritten Gurttrommel zu Rändern der dritten Gurttrommel hin abnimmt.

Beispielsweise sind die erste und die zweite Gurttrommel, insbesondere starr, in einer gemeinsamen Horizontalen angeordnet, wobei die dritte Gurttrommel mit einem vertikalen Versatz hierzu in einem Bereich zwischen der ersten und der zweiten Gurttrommel, bevorzugt starrt, angeordnet ist.

Beispielsweise ist die dritte Gurttrommel feststehend zwischen der ersten und der zweiten Gurttrommel angeordnet und insbesondere alle Gurttrommeln feststehend zueinander angeordnet.

Vorteilhaft wird das Gurtband mittels der Gurttrommeln derart umgelenkt, dass bei einem Auslaufen oder Weglaufen oder Wegdriften des Gurtbandes aus der gewünschten Laufrichtung, zusätzliche Reibungskräfte auf das Gurtband einwirken, die zu einer Zentrierung des Gurtbandes führen und das Gurtband in die gewünschte Laufrichtung zurückdrängen und/oder zurückführen. Die Vorrichtung sorgt hierbei zu einer Verformung und einer lokalen Spannung innerhalb des Gurtbandes, das von einer zunächst planaren Form, mittels der Gurttrommeln, lokal begrenzt und im Bereich der Gurttrommeln, in eine Form der Art einer Wanne oder der einer Welle überführt wird.

Insbesondere wirkt die Zentrierung des Gurtbandes im Sinne einer Selbstzentrierung.

Darüber hinaus kann, mit Ausnahme der Gurttrommeln, auf bewegliche Teile der Vorrichtung verzichtet werden, was eine kostengünstige Herstellung, sowie einen wartungsarmen Betrieb ermöglichen kann. Auch kann dadurch der Verschleiß der Vorrichtung verringert und verbessert werden.

In einer technisch vorteilhaften Ausführungsform ist vorgesehen, dass die Einhüllende der wenigstens dritten Gurttrommel in einer Draufsicht und orthogonal zu der Laufrichtung des Förderers konisch abfallend und/oder ballig ausgebildet ist, wobei insbesondere ein Durchmesser der dritten Gurttrommel kleiner ist, als ein Durchmesser der ersten und/oder der zweiten Gurttrommel.

Vorteilhaft kann so die Zentrierung des Gurtbandes verbessert werden, indem die das Gurtband zentrierenden Kräfte kontrolliert eingeleitet und insbesondere eine definierte Kräfteverlaufskurve ermöglicht werden kann.

In einer weiteren technisch vorteilhaften Ausführungsform ist vorgesehen, dass die erste Gurttrommel und/oder die zweite Gurttrommel und/oder die dritte Gurttrommel mittels wenigstens einer feststehende Felge und einer dazu in Drehrichtung drehbar gelagerten Lauffläche ausgebildet sind.

Vorteilhaft kann ein ungewolltes Aufwickeln und/oder Aufrollen des Gurtbandes um die Gurttrommeln verhindert werden und ein zuverlässiger Betrieb des Förderers, sowie das Führen des Gurtbandes weiter verbessert werden.

Weiterhin ist in einer technisch vorteilhaften Ausführungsform vorgesehen, dass die erste Gurttrommel und/oder die zweite Gurttrommel und/oder die dritte Gurttrommel jeweils aus einer Mehrzahl von Segmentrollen gebildet ist/sind.

Vorteilhaft kann eine material oder insbesondere eine gewichtsparende Herstellung der Vorrichtung ermöglicht werden. Darüber hinaus können nach individuellen Bedürfnissen die Abstände der Segmentrollen zueinander verändert und so die zentrierenden Eigenschaften der Vorrichtung angepasst und verbessert werden. Überdies können die Segmentrollen unterschiedlichen Radialgeschwindigkeiten gerecht werden, was zusätzlich das Führen des Gurtbandes verbessern kann.

In einer weiteren technisch vorteilhaften Ausführungsform ist vorgesehen, dass die dritte Gurttrommel an dem Gurtband allein in einem in Laufrichtung des Förderers mittig liegenden Bereich anliegt.

Vorteilhaft wird eine Verformung der Ränder, bei dennoch gleichzeitiger Verformung des mittleren Bereichs, des Gurtbandes vermieden werden, wodurch die Zentrierung des Gurtbandes zusätzlich unterstützt und verbessert werden kann. Die Ränder des Gurtbandes können somit spannungsfrei verbleiben, was die Zentrierung des Gurtes weiter optimiert.

Außerdem ist in einer technisch vorteilhaften Ausführungsvorgesehen, dass die Gurttrommeln, insbesondere zueinander, starr ausgebildet ist, wobei bevorzugt weitere Gurttrommeln vorgesehen sind, die periodisch und gemäß der Anordnung und/oder der Ausbildung der ersten und/oder der zweiten und/oder der dritten Gurttrommel vorgesehen sind.

Vorteilhaft kann so ein zuverlässiges Führen des Gurtbandes zusätzlich verbessert werden, da das Gurtband durch die Anordnung weiterer Gurttrommeln zusätzlich geführt werden kann. Darüber hinaus kann mittels einer möglichst starren Ausbildung ein Verkippen der Gurttrommeln und ungewollte Zustände somit verhindert werden.

Gemäß eines weiteren Aspekts wird die technische Aufgabe der Erfindung gelöst durch eine Förderanlage umfassend eine Vorrichtung nach einem der vorangehenden Ansprüche, weiterhin umfassend wenigstens eine Antriebstrommel, wenigstens eine Umlenktrommel, ein um die Antriebstrommel und die Umlenktrommel in sich geschlossenes Gurtband, wobei das Gurtband ein Obergurtband, sowie ein Untergurtband umfasst, wobei die Gurttrommeln im Bereich eines Untergurtbandes angeordnet sind. Vorteilhaft können somit die oben genannten Vorteile zur Zentrierung eines Gurtbandes bei einer Förderanlage zur Anwendung gelangen.

In einer technisch vorteilhaften Ausführungsform ist vorgesehen, dass die erste Gurttrommel und die zweite Gurttrommel außerhalb des durch das Gurtband umschlossenen Bereichs angeordnet sind und die dritte Gurttrommel innerhalb des durch das Gurtband umschlossenen Bereichs angeordnet ist.

Vorteilhaft kann eine kompakte Bauform der Förderanlage ermöglicht werden und ungenutzter Raum unterhalb der Förderanlage für die vorteilhafte Zentrierung des Gurtbandes eingesetzt werden.

In einer weiteren technisch vorteilhaften Ausführungsform ist vorgesehen, dass die Gurttrommeln in einem Bereich, insbesondere mittig, zwischen der Antriebstrommel und der Umlenktrommel des Förderers angeordnet sind.

Vorteilhaft kann dadurch die Zentrierung des Gurtes zusätzlich verbessert werden.

Außerdem ist in einer technisch vorteilhaften Ausführungsform vorgesehen, dass die erste Gurttrommel und die zweite Gurttrommel einen Abstand von 550 mm und 250 mm, insbesondere zwischen 500 mm und 300 mm, bevorzugt zwischen 450 mm und 350 mm aufweisen.

Gemäß eines weiteren Aspekts wird die technische Aufgabe der Erfindung gelöst durch ein Verfahren zur Zentrierung eines Gurtbandes an einem Förderer, wobei ein um eine Umlenktrommel und in sich geschlossenes Gurtband mittels einer Antriebstrommel angetrieben wird, wobei das Gurtband zwischen einer ersten, einer zweiten und einer dritten Gurttrommel geführt und gespannt gehalten wird, sodass entweder die erste Gurttrommel und die zweite Gurttrommel auf einer Gurtband-Außenseite und die dritte Gurttrommel auf einer Gurtband-Innenseite anliegen, oder die erste Gurttrommel und die zweite Gurttrommel auf der Gurtband-Innenseite und die dritte Gurttrommel auf der Gurtband-Außenseite anliegen, wobei das Gurtband mittels der Gurttrommeln derart umgelenkt und verformt wird, sodass sowohl parallel, als auch orthogonal zu der Laufrichtung des Gurtbandes das Gurtband eine Wellenform ausgebildet wird.

Hierdurch ergeben sich die bereits genannten Vorteile für das Verfahren.

Ausführungsbeispiele der Erfindung sind in den Figuren schematisch dargestellt und werden im Folgenden näher beschrieben.

Es zeigen:
- Fig. 1:: eine perspektivische Ansicht einer Förderanlage;
- Fig. 2:: eine Seitenansicht einer Förderanlage;
- Fig. 3:: eine Schnittzeichnung einer Förderanlage durch die Schnittebene A-A;
- Fig. 4:: eine Schnittzeichnung einer Förderanlage durch die Schnittebene B-B; sowie
- Fig. 5: eine perspektivische Ansicht einer Vorrichtung zur Zentrierung eines Gurtbandes an einem Förderer.

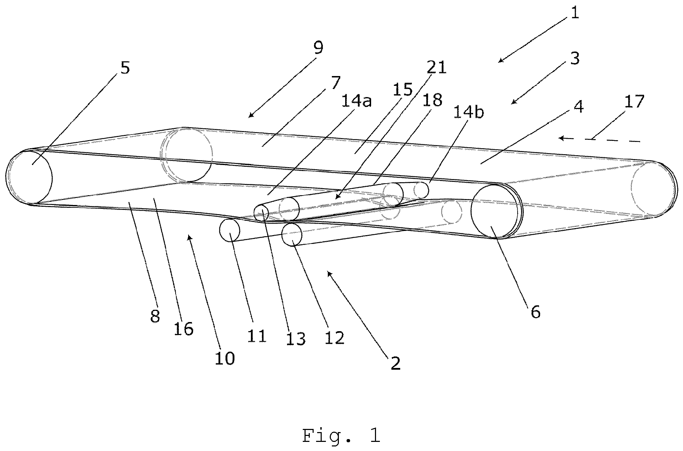

Die Figur 1 zeigt eine perspektivische Ansicht einer Förderanlage 1 umfassend eine Vorrichtung 2 zur Zentrierung eines Gurtbandes 3 an einem Förderer 4. Die Förderanlage 1 umfasst eine Antriebstrommel 5, eine Umlenktrommel 6, sowie das um die Antriebstrommel 5 und die Umlenktrommel 6 in sich geschlossene Gurtband 3, das mittels der Antriebstrommel 5 angetrieben wird. Das Gurtband 3 umfasst ein Obergurtband 7, sowie ein Untergurtband 8. Das Obergurtband 7 ist hierbei derjenige Teil des Gurtbandes 8 der, der zu jedem Zeitpunkt auf einer Oberseite einer Förderanlage 9 zu transportierende Güter trägt. Im Gegensatz hierzu ist das Untergurtband 8 derjenige Teil des Gurtbandes 8 der, dem Obergurtband 7 gegenüberliegend, sich zu jedem Zeitpunkt auf einer Unterseite der Förderanlage 10 befindet.

Weiterhin ist in der Figur 1 im Bereich des Untergurtbandes 8 eine erste Gurttrommel 11, eine zweite Gurttrommel 12, sowie eine dritte Gurttrommel 13 dargestellt, wobei die dritte Gurttrommel 13 kreisförmig und kongruent zueinander liegende Ränder 14a, 14b aufweist. Die Gurttrommeln 11, 12, 13 sind in einem Bereich und mittig zwischen der Antriebstrommel 5 und der Umlenktrommel 6 des Förderers 3 angeordnet. Das Gurtband 4 ist derart zwischen den drei Gurttrommeln 11, 12, 13 geführt und gespannt gehalten, sodass die erste Gurttrommel 11 und die zweite Gurttrommel 12 am Untergurtband 8 auf einer Gurtband-Außenseite 15 anliegen und die dritte Gurttrommel 13, ebenfalls am Untergurtband 8 anliegt, jedoch auf einer Gurtband-Innenseite 16 anliegt. Die erste Gurttrommel 11 und die zweite Gurttrommel 12 sind außerhalb des durch das Gurtband 4 umschlossenen Bereichs angeordnet und die dritte Gurttrommel 13 ist innerhalb des durch das Gurtband 3 umschlossenen Bereichs angeordnet. In einer Draufsicht, und orthogonal zu der Laufrichtung 17 des Förderers 3, nimmt der Durchmesser einer Einhüllenden 18 der dritten Gurttrommel 13 zu den Rändern 14a, 14b hin ab und ist konisch abfallend ausgebildet.

Mittels der Gurttrommeln 11, 12, 13 wird das Untergurtband 8 derart umgelenkt und lokal wannenförmig oder wellenförmig verformt, dass bei einem Wegdriften zusätzliche Reibungskräfte auf das Untergurtband 8 derart und in der Art einer Selbstzentrierung wirken, dass das Gurtband vorteilhaft zurück in die gewünschte Richtung gedrängt wird.

Das Untergurtband 8 wird hierbei verformt.

Auch ist in Figur 1 dargestellt ist, dass das Untergurtband 8 auf Grund des Zusammenwirkens zwischen den Gurttrommeln 11, 12, 13 zu einer Wellenform verformt ist. Das Zusammenwirken der Gurttrommeln 11, 12 und 13 sorgt hierbei vorteilhaft zu einer Verformung und einer lokalen Spannung innerhalb des Gurtbandes, wobei das Gurtband 4 von einer zunächst planaren Form, lokal und im Bereich der Gurttrommeln 11, 12, 13, in eine Form der Art einer Wanne oder der einer Welle überführt wird. Dies sorgt vorteilhaft dazu, dass bei einem Auslaufen oder Weglaufen oder Wegdriften des Gurtbandes 4 aus der gewünschten Laufrichtung 17, zusätzliche Reibungskräfte auf das Gurtband 4 einwirken, die zu einer Zentrierung führen und das Gurtband 4 in die gewünschte Laufrichtung 17 zurückdrängen. Vorteilhaft kann so, mit Ausnahme der Gurttrommeln 11, 12, 13, auf bewegliche Teile verzichtet werden, was eine kostengünstige Herstellung, sowie einen wartungsarmen Betrieb ermöglichen kann. Auch kann dadurch der Verschleiß verringert und verbessert werden.

Nicht in Figur 1 dargestellt ist, dass die Positionen der Gurttrommeln 11, 12, 13 auch, in Bezug auf das Untergurtband 8, invertiert angeordnet sein können, oder dass weitere Gurttrommeln in periodischer Fortsetzung der Anordnung der ersten, zweiten und dritten Gurttrommel 11, 12, 13 in Richtung der Antriebs- oder der Umlenktrommel 5, 6 vorgesehen sein können.

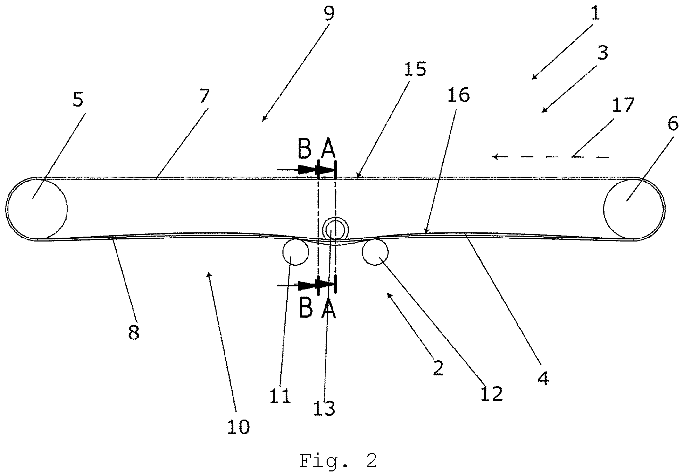

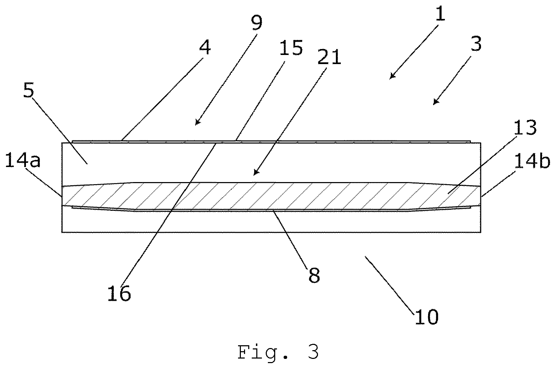

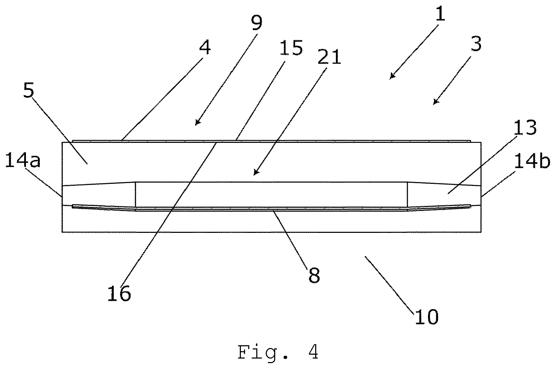

In einer Zusammenschau mit der Figur 1 ist in der Figur 2 dargestellt, dass das Untergurtband 8 im Bereich der Gurttrommeln 11, 12, 13 auf Grund derer Einwirkung zu einer Wellenform sowohl in Laufrichtung 17 des Förderers 3, als auch orthogonal zu der Laufrichtung 17 des Förderers 3 verformt ist. Darüber hinaus ist in der Figur 2 eine erste Schnittebene A-A, sowie eine zweite Schnittebene B-B bezeichnet, die in den Figuren 3 und 4 dargestellt und näher beschrieben sind.

In der Figur 3 ist eine Schnittzeichnung einer Förderanlage 1 durch die in der Figur 2 bezeichnete erste Schnittebene A-A dargestellt. Zu sehen ist das Obergurtband 7, sowie das Untergurtband 8, nebst dritter Umlenkrolle 13. Die Einhüllende 18 des Durchmesser der dritten Umlenkrolle 13 ist orthogonal zu der in den Figuren 1 und 2 dargestellte Laufrichtung 17 des Förderers 3 zu den Rändern der Gurttrommel 14a, 14b hin abnehmend dargestellt.

In der Figur 4 ist eine Schnittzeichnung einer Förderanlage 1 durch die in der Figur 2 bezeichnete zweite Schnittebene B-B dargestellt, die in Laufrichtung 17 des Förderers 3 versetzt ist. Analog zu der Figur 3 ist in Figur 4 ebenfalls das Obergurtband 7, sowie das Untergurtband 8, nebst dritter Umlenkrolle 13 dargestellt. In einer Zusammenschau der Figur 3 mit der Figur 4 ist dargestellt, dass das Untergurtband 8 im Bereich der Ränder 14a, 14b in einem entspannten Zustand und in einem Mittelbereich 21 der dritten Gurttrommel 13 vorgespannt vorliegt. Die dritte Gurttrommel 13 liegt somit an dem Untergurtband 8 allein in dem in Laufrichtung 17 des Laufbandes 3 mittig liegenden Mittelbereich 21 an.

Eine Verformung des Untergurtbandes im Bereich der Ränder der Gurttrommeln 14a, 14b kann so vorteilhaft vermieden werden, obgleich gleichzeitig das Untergurtband in einem Mittelbereich der Gurttrommel verformt ist und/oder verformt wird. Hierdurch kann die Zentrierung des Gurtbandes zusätzlich unterstützt und verbessert werden. Die Ränder des Gurtbandes können somit spannungsfrei verbleiben, was die Zentrierung des Gurtes weiter optimiert.

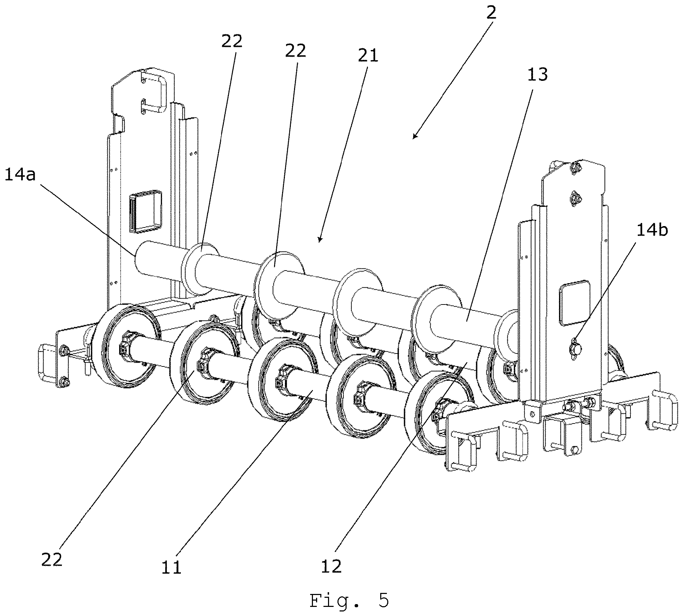

In der Figur 5 ist eine perspektivische Ansicht einer Vorrichtung zur Zentrierung eines hier nicht dargestellten Gurtbandes an einem Förderer dargestellt. In einer Zusammenschau mit den übrigen Figuren ist die erste, die zweite, sowie die dritte Gurttrommel 11, 12, 13 dargestellt, wobei die dritte Gurttrommel 13 exemplarisch aus einer Mehrzahl von Segmentrollen gebildet ist, die zu den Rändern der Gurttrommel 14a, 14b einen geringeren Durchmesser aufweisen. Dadurch, kann eine material- und eine gewichtssparende Herstellung und eine kostengünstige Realisierung der dritten Gurttrommel ermöglicht werden. Nach individuellen Bedürfnissen können so auch etwaige Abstände der Segmentrollen zueinander justiert werden und beispielsweise verschiedene Radialgeschwindigkeiten berücksichtigt werden, was das Führen des Gurtbandes verbessern kann.

### Bezugszeichen:

- 1: Förderanlage
- 2: Vorrichtung zur Zentrierung eines Gurtbandes
- 3: Förderer
- 4: Gurtband
- 5: Antriebstrommel
- 6: Umlenktrommel
- 7: Obergurtband
- 8: Untergurtband
- 9: Oberseite der Förderanlage
- 10: Unterseite der Förderanlage
- 11: erste Gurttrommel
- 12: zweite Gurttrommel
- 13: dritte Gurttrommel
- 14a: Ränder der Gurttrommel
- 14b: Ränder der Gurttrommel
- 15: Gurtband-Außenseite
- 16: Gurtband-Innenseite
- 17: Laufrichtung des Förderers
- 18: Einhüllende
- 19: Felge
- 20: Lauffläche
- A-A: erste Schnittebene
- B-B: zweite Schnittebene
- 21: Mittelbereich der Gurttrommel
- 22: Segmentrollen

## Patentansprüche

1. Vorrichtung zur Zentrierung eines Gurtbandes (4) an einem Förderer (3), umfassend
ein um eine Umlenkrolle (6) und eine Antriebsrolle (5) und in Laufrichtung (17) des Förderers (3) angeordnetes Gurtband (4),
wobei das Gurtband (4) eine Gurtband-Außenseite (15) und eine Gurtband-Innenseite (16) umfasst,
wobei das Gurtband (4) ein Obergurtband (7) sowie ein Untergurtband (8) umfasst,
eine erste Gurttrommel (11),
eine zweite Gurttrommel (12),
sowie eine dritte Gurttrommel (13),
wobei wenigstens die dritte Gurttrommel (13) kreisförmig und kongruent zueinander liegende Ränder (14a, 14b) aufweist,
wobei das Gurtband (4) derart zwischen den Gurttrommeln (11, 12, 13) geführt und gespannt gehalten ist, sodass
entweder die erste Gurttrommel (11) und die zweite Gurttrommel (12) auf der Gurtband-Außenseite (15) und die dritte Gurttrommel (13) auf der Gurtband-Innenseite (16) anliegen,
oder die erste Gurttrommel (11) und die zweite Gurttrommel (12) auf der Gurtband-Innenseite (16) und die dritte Gurttrommel (13) auf der Gurtband-Außenseite (17) anliegen,
**dadurch gekennzeichnet, dass**
in einer Draufsicht und orthogonal zu der Laufrichtung (17) des Förderers (3), der Durchmesser einer Einhüllenden der dritten Gurttrommel (13) zu Rändern (14a, 14b) der dritten Gurttrommel (13) hin abnimmt.

2. Vorrichtung nach einem der vorangehenden Ansprüche,
**dadurch gekennzeichnet, dass**
die Einhüllende der wenigstens dritten Gurttrommel (13) in einer Draufsicht und orthogonal zu der Laufrichtung (17) des Förderers (3) konisch abfallend und/oder ballig ausgebildet ist, wobei insbesondere ein Durchmesser der dritten Gurttrommel (13) kleiner ist, als ein Durchmesser der ersten Gurttrommel (11) und/oder der zweiten Gurttrommel (12).

3. Vorrichtung nach einem der vorangehenden Ansprüche,
**dadurch gekennzeichnet, dass**
die erste Gurttrommel (11) und/oder die zweite Gurttrommel (12) und/oder die dritte Gurttrommel (13) mittels wenigstens einer feststehende Felge (19) und einer dazu in Drehrichtung drehbar gelagerten Lauffläche (20) ausgebildet sind.

4. Vorrichtung nach einem der vorangehenden Ansprüche
**dadurch gekennzeichnet, dass**
die erste Gurttrommel (11) und/oder die zweite Gurttrommel (12) und/oder die dritte Gurttrommel (13) jeweils aus einer Mehrzahl von Segmentrollen (22) gebildet ist/sind.

5. Vorrichtung nach einem der vorangehenden Ansprüche,
**dadurch gekennzeichnet, dass**
die dritte Gurttrommel (13) an dem Gurtband (4) allein in einem in Laufrichtung (17) des Förderers (3) mittig liegenden Bereich anliegt.

6. Vorrichtung nach einem der vorangehenden Ansprüche,
**dadurch gekennzeichnet, dass**
die Gurttrommeln (11, 12, 13), insbesondere zueinander, starr ausgebildet ist,
wobei bevorzugt weitere Gurttrommeln vorgesehen sind, die periodisch und gemäß der Anordnung und/oder der Ausbildung der ersten Gurttrommel (11) und/oder der zweiten Gurttrommel (12) und/oder der dritten Gurttrommel (13) vorgesehen sind.

7. Förderanlage umfassend eine Vorrichtung nach einem der vorangehenden Ansprüche, weiterhin umfassend
wenigstens eine Antriebstrommel (5),
wenigstens eine Umlenktrommel (6),
ein um die Antriebstrommel (5) und die Umlenktrommel (6) in sich geschlossenes Gurtband (4),
wobei das Gurtband (4) ein Obergurtband (7), sowie ein Untergurtband (8) umfasst,
**dadurch gekennzeichnet, dass**
die Gurttrommeln (11, 12, 13) im Bereich eines Untergurtbandes (8) angeordnet sind.

8. Förderanlage nach Anspruch 7,
**dadurch gekennzeichnet, dass**
die erste Gurttrommel (11) und die zweite Gurttrommel (12 außerhalb des durch das Gurtband (4) umschlossenen Bereichs angeordnet sind und die dritte Gurttrommel (13) innerhalb des durch das Gurtband (4) umschlossenen Bereichs angeordnet ist.

9. Förderanlage nach einem der Ansprüche 7 oder 8,
**dadurch gekennzeichnet, dass**
die Gurttrommeln (11, 12, 13) in einem Bereich, insbesondere mittig zwischen der Antriebstrommel (5) und der Umlenktrommel (6) des Förderers (3), angeordnet sind.

10. Förderanalage nach einem der Ansprüche 7 oder 8 oder 9,
**dadurch gekennzeichnet, dass**
die erste Gurttrommel (11) und die zweite Gurttrommel (2) einen Abstand von 550 mm und 250 mm, insbesondere zwischen 500 mm und 300 mm, bevorzugt zwischen 450 mm und 350 mm aufweisen.

11. Verfahren zur Zentrierung eines Gurtbandes an einem Förderer,
wobei ein um eine Umlenktrommel (6) und in sich geschlossenes Gurtband (4) mittels einer Antriebstrommel (5) angetrieben wird,
wobei das Gurtband (4) zwischen einer ersten Gurttrommel (11), einer zweiten Gurttrommel (12) und einer dritten Gurttrommel (13) geführt und gespannt gehalten wird, sodass
entweder die erste Gurttrommel (11) und die zweite Gurttrommel (12) auf einer Gurtband-Außenseite (15) und die dritte Gurttrommel (13) auf einer Gurtband-Innenseite (16) anliegen,
oder die erste Gurttrommel (11) und die zweite Gurttrommel (12) auf der Gurtband-Innenseite (16) und die dritte Gurttrommel (13) auf der Gurtband-Außenseite (15) anliegen,
**dadurch gekennzeichnet, dass**
das Gurtband (4) mittels der Gurttrommeln (11, 12, 13) derart umgelenkt und verformt wird, sodass sowohl parallel, als auch orthogonal zu der Laufrichtung (17) des Förderers (3) das Gurtband (4) eine Wellenform ausgebildet wird.
